# FASCICULE DE BREVET EUROPEEN

(11) **EP 1 527 922 B1**
(45) Date de publication et mention de la délivrance du brevet: **19.12.2007**
(21) Numéro de dépôt: 04364066.3
(22) Date de dépôt: 29.10.2004
(51) Int. Cl.: B60J 1/20, B60Q 3/02

(54) **Système d'éclairage d'ambiance pour véhicule automobile, dispositif d'éclairage, véhicule et store correspondants**
Umgebungsbeleuchtungssystem für Kraftfahrzeuge, Beleuchtungseinrichtung, Fahrzeug und Rollo mit einem solchen System
Ambient lighting system for motor vehicle, lighting device, vehicle and blind therewith

(30) Priorité: 03.11.2003 FR 0312886; 06.02.2004 FR 0401190
(43) Date de publication de la demande: 04.05.2005
(73) Titulaire: WAGON SAS, 79302 Bressuire Cédex (FR)
(72) Inventeur: Jincheleau, Michel, 79320 Moncoutant (FR)
(74) Mandataire: Bioret, Ludovic

(56) Documents cités:
- DE-A- 10 115 378
- DE-A- 19 936 537
- DE-U- 9 413 014
- DE-U- 29 517 065
- FR-A- 2 803 569

## Description

### 1. Domaine de l'invention

Le domaine de l'invention est celui des véhicules automobiles, et plus précisément celui de l'éclairage, ou de « l'ambiance », à l'intérieur d'un véhicule automobile.

### 2. Art antérieur

### 2.1. Les plafonniers

Il existe depuis de nombreuses années des systèmes d'éclairage classiques à l'intérieur d'un véhicule, appelés « plafonniers ». Ces systèmes, solidarisés au pavillon d'un véhicule, permettent d'éclairer l'intérieur de ce dernier, par exemple lorsque l'utilisateur enclenche un interrupteur ou lorsqu'une portière du véhicule est ouverte.

Les plafonniers sont des systèmes d'éclairage pratiques pour les automobilistes lorsque le véhicule est à l'arrêt, puisqu'ils permettent d'éclairer correctement une grande partie de l'habitacle du véhicule. Par contre, ces systèmes sont particulièrement dangereux s'ils sont utilisés de nuit ou dans la pénombre, lors d'un déplacement. En effet, ces plafonniers n'étant pas dirigeables, leur éclairage peut perturber la vision du conducteur lorsqu'il conduit. Ils ne permettent donc pas au passager avant de consulter une carte routière, par exemple, sans gêner le conducteur, ou aux passagers arrière de lire un livre s'ils le souhaitent.

### 2.2. Les liseuses

Une alternative aux plafonniers a donc été proposée, consistant à séparer ce dernier en deux parties distinctes : une première conservant le rôle décrit précédemment, et une seconde permettant de concentrer la lumière dans une seule direction. Cette seconde partie, appelée « liseuse », va permettre de diriger la lumière vers une direction choisie, de manière à éclairer le passager avant sans gêner le conducteur par exemple.

Un inconvénient de cette technique de l'art antérieur est que les liseuses, bien que dirigeables, sont fixées au pavillon des véhicules, et ne permettent d'éclairer qu'une zone réduite de l'habitacle d'un véhicule.

Par conséquent, les occupants d'un véhicule restent généralement dans la pénombre ou dans l'obscurité pour ne pas gêner le conducteur, ce qui les empêche de lire ou de se voir.

### 2.3. Autres solutions

Il a également été proposé, dans le document FR 2 803 569 déposé le 7 janvier 2000, une technique d'éclairage de l'habitacle d'un véhicule automobile permettant de pallier les inconvénients des plafonniers.

Pour ce faire, la technique présentée dans ce document repose sur l'utilisation d'un élément électroluminescent en forme générale de panneau, orienté de façon à éclairer l'intérieur de l'habitacle d'un véhicule. Ce panneau d'éclairage peut notamment être un rideau opaque d'un store, le rideau étant situé contre la vitre de façon à occulter celle-ci et le panneau électroluminescent étant situé du côté de l'intérieur de l'habitacle pour éclairer celui-ci.

Finalement, le document DE 199 36 537, déposé le 3 août 1999, a proposé un store associé à des moyens d'éclairage activables électriquement.

Selon la technique présentée dans ce document, les moyens d'éclairage sont prévus sur ou dans la toile du store, de façon à obtenir un éclairage de faible intensité, permettant de ne pas gêner le conducteur, et à réaliser un système d'éclairage d'une grande surface.

### 3. Objectifs de l'invention

L'invention a notamment pour objectif de pallier ces inconvénients de l'art antérieur.

Plus précisément, un objectif de l'invention est de fournir une solution améliorant le confort des passagers lorsqu'il fait nuit, et cela sans perturber le conducteur.

Un autre objectif de l'invention est de proposer une nouvelle approche de l'éclairage à l'intérieur d'un véhicule, qui soit esthétique, ergonomique, ludique et/ou luxueuse.

L'invention a encore pour objectif de mettre en oeuvre une solution efficace, facile à monter et peu coûteuse.

Encore un autre objectif de l'invention est de proposer une technique qui peut, le cas échéant, être montée en option sur un véhicule.

### 4. Caractéristiques essentielles de l'invention

Ces objectifs, ainsi que d'autres qui apparaîtront par la suite, sont atteints à l'aide d'un système d'éclairage d'ambiance pour véhicule automobile.

Selon l'invention, un tel système combine au moins un store présentant une toile de protection contre les effets du soleil, mobile entre une position repliée et une position déployée, et des moyens d'éclairage distincts et indépendants de la toile, la toile étant interposée entre les moyens d'éclairage et l'espace à éclairer à l'intérieur du véhicule lorsqu'elle est dans la position déployée, et étant choisie de façon à atténuer, répartir, diffuser et/ou moduler la lumière produite par les moyens d'éclairage.

Ainsi, l'invention repose sur une approche tout à fait nouvelle et inventive d'un système d'éclairage à l'intérieur d'un véhicule, puisqu'une toile est intercalée entre la source lumineuse et l'intérieur du véhicule à éclairer, procurant ainsi une lumière d'ambiance dans l'habitacle.

Selon un premier mode de réalisation avantageux, les moyens d'éclairage sont montés dans la garniture du véhicule.

Il s'agit d'un mode de mise en oeuvre de l'invention simple et efficace, et particulièrement esthétique.

Notamment, une partie des moyens d'éclairage d'un tel système d'éclairage d'ambiance peut être montée dans une portière et/ou dans le pavillon et/ou au voisinage de la vitre de custode et/ou dans la tablette arrière.

Selon un autre mode de réalisation (qui peut bien sûr être combiné avec le précédent) de l'invention une partie des moyens d'éclairage sont solidaires du store.

Notamment, les moyens d'éclairage peuvent être montés sur au moins un des éléments appartenant au groupe comprenant : une barre de tirage, des moyens d'actionnement du store, des moyens de guidage et/ou de maintien du store, une patte de tirage.

Dans ce cas, ces éléments présentent avantageusement des moyens atténuant, répartissant, diffusant, modulant et/ou redirigeant la lumière.

Plusieurs emplacements à l'intérieur du véhicule peuvent ainsi être équipés, diffusant une lumière d'ambiance provenant de différentes sources lumineuses et améliorant le confort des passagers, sans perturber le conducteur.

Selon un mode de réalisation préférentiel, le moyen d'actionnement du store comprend au moins une biellette.

Avantageusement, les moyens d'éclairage comprennent un cylindre transparent associé à au moins une diode électroluminescente (LED) dont la lumière est dirigée vers une extrémité du cylindre.

Une telle diode nécessitant peu d'énergie, on obtient un bon éclairage avec une faible consommation. Bien sûr, d'autres types de source lumineuse peuvent également être utilisés.

Le cylindre est avantageusement en matière plastique. Il est ainsi facile à former (la lumière suit l'axe du cylindre, même si celui-ci n'est pas rectiligne) et à travailler). Il peut également être en verre ou en matériau similaire. Selon certaines variantes, on peut prévoir qu'il soit teinté, légèrement opaque ou translucide, en fonction des effets souhaités.

Dans ce cas, le cylindre présente avantageusement des stries dirigeant une partie de la lumière sensiblement perpendiculairement à l'axe du cylindre. La lumière peut ainsi être dirigée vers la vitre, dans le cas où le cylindre est monté horizontalement dans la garniture d'une portière.

Dans un mode de réalisation particulier de ces moyens d'éclairage, les stries présentent au moins deux longueurs distinctes.

Ces stries ne sont par ailleurs pas forcément espacées de la même distance. Elles peuvent être espacées lorsqu'elles sont près de la source lumineuse, et de plus en plus rapprochées en s'en éloignant. Cela permet de conserver sensiblement la même intensité lumineuse tout au long du cylindre.

Selon d'autres approches, les différentes stries peuvent permettre, par leurs espacements et/ou par leurs tailles, de moduler la lumière tout au long du cylindre, créant ainsi des effets lumineux particuliers.

Avantageusement, le store vient se loger, en position repliée, à l'intérieur de la garniture intérieure du véhicule, et est dissimulé par un couvercle. Le couvercle permet de recouvrir une fente, lorsque le store est en position repliée, qui permet à la toile de circuler.

En effet, il est judicieux de couvrir cette fente dans laquelle peuvent se glisser de la poussière et des objets fins pouvant détériorer la toile, et qui procure un aspect peu esthétique à l'habitacle du véhicule. Ce couvercle prend une position de dégagement qui ne perturbe pas le déploiement de la toile lorsque celle-ci n'est plus repliée.

Avantageusement, le couvercle peut s'ouvrir sous l'effet d'une pression et présente un mécanisme de ralentissement de l'ouverture.

Ainsi on obtient un effet esthétique et ergonomique lors de l'ouverture de ce couvercle.

Notamment, l'ouverture du couvercle fait avantageusement remonter légèrement la barre de tirage, ce qui permet une préhension facile par exemple d'une patte de tirage.

De manière préférentielle, le couvercle recouvre également les moyens d'éclairage.

Avantageusement, le couvercle présente des moyens atténuant, répartissant, diffusant, modulant et/ou redirigeant la lumière.

Ainsi le couvercle permet de jouer avec l'éclairage, également lorsque la toile est repliée.

Par exemple, le couvercle peut rediriger au moins une partie de la lumière vers un occupant du véhicule, lorsqu'il est ouvert et que la toile est repliée, pour assurer une fonction de liseuse.

De ce fait, les moyens d'éclairage permettent également à un passager de lire dans le véhicule, lorsqu'il fait nuit.

Comme indiqué plus haut, une partie des moyens d'éclairage peut être montée dans le pavillon. Avantageusement, les moyens d'éclairage pourront être placés au niveau d'au moins un bord de celui-ci et/ou au niveau d'un angle (ou coin) du pavillon.

La toile déployée entre les moyens d'éclairage et l'habitacle permettant alors l'obtention d'un éclairage diffus dans l'habitacle du véhicule.

Un telle approche pourra de façon avantageuse être réalisée dans le cas d'un pavillon en verre.

Selon un mode de réalisation avantageux de l'invention, lorsque le pavillon est formé de deux panneaux superposés, tel qu'un double vitrage par exemple, formé de deux panneaux vitrés, le système d'éclairage pourra être monté dans l'espace compris entre les deux panneaux.

Les moyens d'éclairage, ainsi que la toile du store lorsqu'elle est déployée, sont alors compris dans cet espace, la toile du store s'interposant entre les moyens d'éclairage et l'habitacle, de façon à atténuer, répartir, diffuser et/ou moduler la lumière produite par les moyens d'éclairage.

De plus, les moyens d'éclairages du système selon l'invention peuvent également être utilisés par les occupants du véhicule lorsque la toile du store est repliée. Ils peuvent alors, en effet, former un ou des plafonniers.

L'invention concerne également les dispositifs d'éclairage pour un système tel que décrit précédemment.

L'invention concerne également un véhicule automobile équipé d'un ou plusieurs systèmes d'éclairage d'ambiance tels que décrits ci-dessus.

Notamment ce système d'éclairage d'ambiance peut être monté au moins sur les deux portes arrière du véhicule et/ou au moins sur le pavillon.

L'invention concerne encore un store équipé d'un tel système d'éclairage d'ambiance.

Ainsi, l'équipementier peut développer une gamme de stores équipés d'un système d'éclairage d'ambiance, qui peuvent être montés de manière optionnelle sur une portière ou sur un véhicule.

Notamment, ce store comprend des moyens de préhension, encore appelés patte de tirage, présentant des moyens atténuant, répartissant, diffusant, modulant et/ou redirigeant la lumière.

Ainsi, lors de l'activation des moyens d'éclairage d'un système d'éclairage d'ambiance selon l'invention, la patte de tirage du store est rétro éclairée, ce qui permet de la retrouver plus facilement dans la pénombre.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente, en coupe, un système d'éclairage d'ambiance selon l'invention, avec l'emplacement des moyens d'éclairage et du store, lorsqu'ils sont montés à l'intérieur d'une portière ;
- la figure 2 présente une portière équipée du système décrit en figure 1 lorsque le store est en position déroulée ;
- la figure 3 illustre la même portière lorsque le store est utilisé en fonction liseuse ;
- la figure 4 présente un deuxième mode de réalisation du système d'éclairage selon l'invention ;
- les figures 5A et 5B illustrent un troisième mode de réalisation du système d'éclairage selon l'invention ;
- la figure 6 illustre des moyens de préhension d'un store tel que celui présenté aux figures précédentes ;
- les figures 7A et 7B présentent deux mises en oeuvre du système d'éclairage selon l'invention lorsque celui-ci est monté dans un pavillon formé de formé de deux panneaux superposés.

### 6. Description d'un mode de réalisation de l'invention

Le principe général de l'invention repose sur une nouvelle approche d'éclairage d'ambiance à l'intérieur d'un véhicule, composé d'un store et d'une source lumineuse, la toile de store s'intercalant entre la source lumineuse et l'espace à éclairer, à savoir une partie de l'habitacle du véhicule, créant ainsi une lumière d'ambiance.

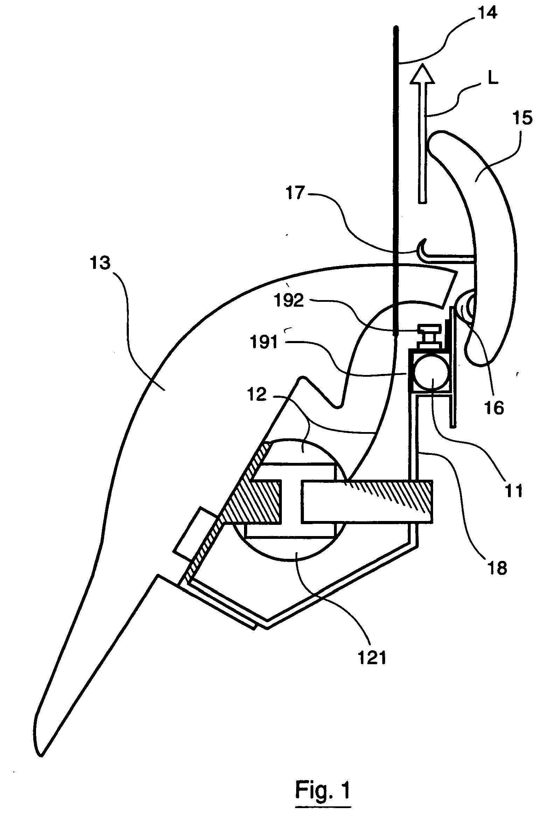

On présente, en relation avec la figure 1, un premier mode de réalisation préférentiel de l'invention.

Cette figure 1 présente un système d'éclairage d'ambiance selon l'invention où les moyens d'éclairage et le store 12 sont montés à l'intérieur de la garniture 13 d'une portière, la toile 14 du store étant en position déployée.

Dans ce mode de réalisation décrit, les moyens d'éclairage sont composés d'un cylindre 11 transparent, par exemple en matière plastique, et d'une LED, non représentée sur la figure, montés sur un emplacement prévu à cet effet sur une partie du châssis ou sur une pièce solidarisée au châssis 18 d'une portière.

La LED est placée à une extrémité du cylindre 11 et permet de l'éclairer par l'intérieur. Le cylindre 11, comporte une série de stries parallèles, qui permettent de diriger la lumière émise par la diode électroluminescente dans une direction sensiblement perpendiculaire à l'axe du cylindre (flèche L). Ce cylindre peut également être en verre ou en matériau similaire, l'utilisation de matière plastique permettant néanmoins de le former plus facilement, et d'obtenir un coût réduit.

Par ailleurs, le cylindre composant une partie des moyens d'éclairage présentés sur cette figure peut adopter différentes formes : il n'est pas forcément rectiligne. En effet, le cylindre utilisé va servir de guide pour la lumière. II peut alors être possible de le courber légèrement pour l'adapter plus facilement à la forme de l'intérieur d'une portière par exemple.

L'utilisation d'une diode électroluminescente et d'un tel cylindre strié permet d'obtenir un bon éclairage, tout en conservant une faible consommation.

Le cylindre transparent 11 est maintenu à ces deux extrémités par deux éléments de maintien, un seul de ces éléments étant représenté sur la figure 1.

Les éléments de maintien utilisés dans ce mode de réalisation comprennent des crochets de maintien 191 et des vis 192. Il est bien entendu que d'autres moyens pour maintenir le cylindre 11 peuvent être envisagés, comme par exemple le clipsage du cylindre 11 au châssis 18, ou encore sa soudure ou son collage.

Le store 12 est quant à lui un store à enrouleur. Le tube d'enroulement 121 du store 12 peut aussi bien être monté dans un boîtier prévu à cet effet que directement dans un logement formé dans la structure de la porte.

Un couvercle 15 permet d'obturer une fente, cette dernière permettant à la toile 14 de circuler. Sur la figure 1, le couvercle 15 est représenté en position ouverte, qui correspond à une position de dégagement ne perturbant pas le déploiement de la toile, et permettant le passage de la lumière.

Dans ce premier mode de réalisation préférentiel décrit, le couvercle 15 présente un mécanisme de ralentissement de l'ouverture 16, réalisé par exemple à partir d'une roue dentée.

Avantageusement, une barre de tirage du store 12, non représentée sur la figure, remonte de quelques centimètres lors de l'ouverture du couvercle 15, pour permettre une préhension facile de la patte de tirage. Cette barre peut par exemple remonter sous l'effet d'une force de rappel, ou par un moyen d'entraînement lié au couvercle 15.

Le couvercle 15 est également équipé d'un crochet 17, permettant de maintenir le couvercle 15 en position fermée, par l'intermédiaire de moyens d'accrochage complémentaires situés au niveau de la garniture 13 qui ne sont pas représentés sur cette figure.

L'ouverture de ce couvercle 15 s'obtient par exemple simplement en appuyant sur celui-ci, pour dégager le crochet 17.

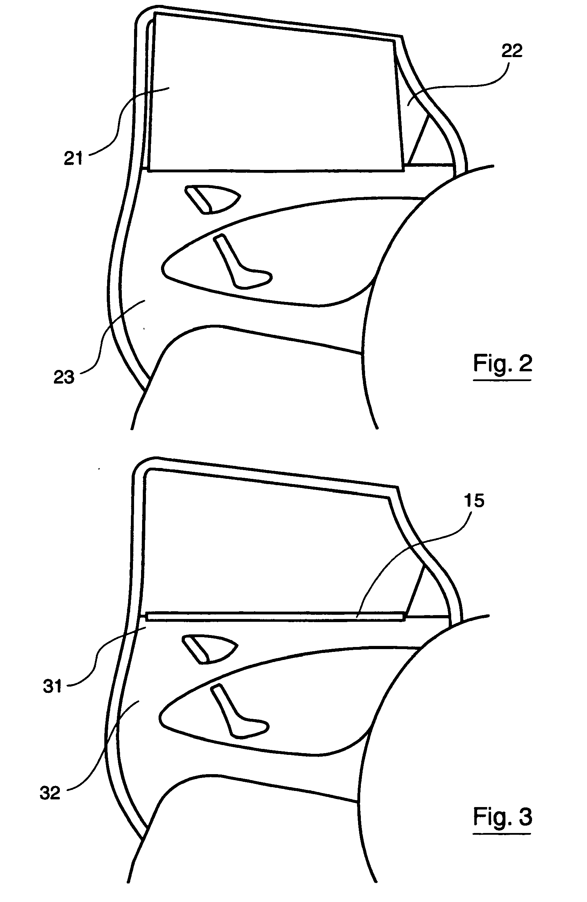

La figure 2 permet d'illustrer la fonction d'éclairage d'ambiance du système décrit en figure 1, mise en oeuvre à l'aide d'une toile de store 21 déployée devant la vitre arrière 22 d'un véhicule. Les moyens d'éclairage et le store sont montés dans la garniture de la portière 23.

On constate sur cette figure que la toile du store 21 permet de diffuser de façon très agréable la lumière, offrant ainsi une lumière tamisée à l'intérieur de l'habitacle du véhicule, sans gêner le conducteur.

Différentes couleurs ou structures de toiles de store présentant des capacités à diffuser la lumière peuvent être utilisées. Ainsi, une toile comportant des couleurs chaudes permettra de maintenir le conducteur et les passagers dans un état d'éveil tandis qu'une toile bleutée permettra plus facilement aux passagers de se relaxer ou aux enfants de dormir.

Une deuxième fonction de l'invention est décrite en figure 3, représentant le store latéral en position enroulée permettant d'utiliser le système d'éclairage d'ambiance décrit en fonction liseuse, lorsqu'il fait noir dehors.

Comme dans le mode de réalisation préférentiel décrit, le store et les moyens d'éclairage 31 sont montés dans la garniture de la portière 32.

Lorsque la toile de store n'est pas déployée, le couvercle 15 permet dé diriger la lumière des moyens d'éclairage constitués du tube cylindrique 31 vers le passager, par exemple s'il est constitué d'un matériau redirigeant la lumière, ou à l'aide d'un miroir. Une partie de la lumière est alors redirigée vers un occupant du véhicule, lui permettant par exemple de lire dans le véhicule, alors qu'il fait nuit.

Selon différentes approches, ce résultat peut être obtenu bien que le couvercle soit fermé (la lumière pouvant sortir d'une zone latérale prévue à cet effet) ou ouvert (le dessous du couvercle pouvant alors être équipé d'un matériau réfléchissant). On peut également combiner les deux approches, pour offrir plusieurs niveaux de luminosité.

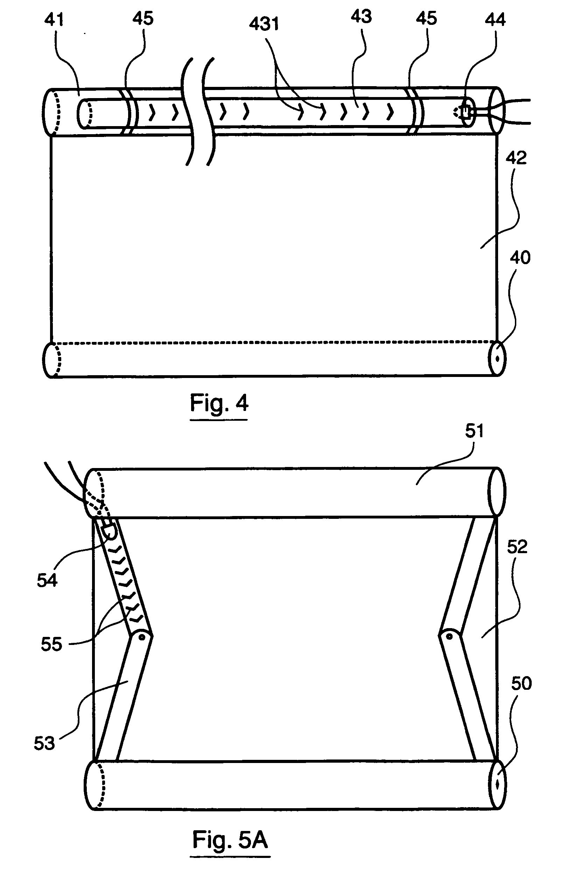

On présente en relation avec la figure 4 un deuxième mode de réalisation du système d'éclairage d'ambiance selon l'invention.

Dans ce mode de réalisation, les moyens d'éclairage sont solidarisés à une barre de tirage 41 du store. Classiquement, une des extrémités de la toile 42 est montée sur un rouleau, ou tube enrouleur 40, mobile en rotation. L'autre extrémité de la toile est munie de la barre de tirage 41, la toile 42 du store étant représentée en position déployée.

Comme décrit précédemment en relation avec la figure 1, les moyens d'éclairage sont composés d'un cylindre 43 transparent, comportant une série de stries 431 parallèles, et d'une diode électroluminescente 44, placée à une des extrémités du cylindre 43 et permettant de l'éclairer par l'intérieur. L'utilisation d'une LED 44 et d'un tel cylindre 43 strié permet d'obtenir un bon éclairage, tout en conservant une faible consommation.

Dans ce deuxième mode de réalisation, la barre de tirage 41 du store prévoit des moyens de solidarisation du cylindre et de la LED. Notamment, comme illustré en figure 4, le cylindre transparent est maintenu à ces deux extrémités par deux éléments de maintien 45. Il est bien entendu que d'autres moyens pour maintenir le cylindre peuvent être envisagés, comme par exemple le clipsage du cylindre à la barre de tirage, ou encore sa soudure ou son collage.

Selon une variante de réalisation, les moyens d'éclairage sont montés à l'intérieur de la barre de tirage. La barre de tirage 41 présente alors des moyens atténuant, répartissant, diffusant, modulant et/ou redirigeant la lumière.

Lorsque la toile du store est en position déployée, les moyens d'éclairage solidarisés à la barre de tirage 41 dirigent la lumière derrière la toile 42 du store, de sorte que la toile 42 soit interposée entre les moyens d'éclairage (cylindre 43 et LED 44) et la partie de l'habitacle d'un véhicule à éclairer, créant ainsi une lumière d'ambiance à l'intérieur du véhicule (fonction éclairage d'ambiance).

Lorsque la toile 42 du store n'est pas déployée, la barre de tirage 41 permet de diriger la lumière des moyens d'éclairage vers le passager, par exemple à l'aide d'un miroir. Un couvercle présentant des moyens atténuant, répartissant, diffusant, modulant et/ou redirigeant la lumière peut notamment obturer la fente permettant à la toile du store de circuler (fonction liseuse).

Selon une autre variante de réalisation de ce second mode de réalisation, les moyens d'éclairage sont directement composés de la barre de tirage 41 et d'une LED, la barre de tirage 41 assurant la même fonction que le cylindre 43. Dans ce cas, la barre de tirage 41 est en matériau transparent et comporte une série de stries parallèles, qui permettent de diriger la lumière émise par la diode électroluminescente dans une direction sensiblement perpendiculaire à l'axe de la barre de tirage.

La figure 5A illustre un troisième mode de réalisation du système d'éclairage d'ambiance selon l'invention, dans lequel les moyens d'éclairage sont solidarisés aux moyens d'actionnement du store. Comme représenté sur la figure 5A, une des extrémités de la toile 52 est montée sur un tube enrouleur 50, mobile en rotation. L'autre extrémité de la toile est munie de la barre de tirage 51.

En l'espèce, les moyens d'actionnement sont composés d'au moins une biellette 53 (ici deux biellettes formant un compas) assurant le guidage et/ou le maintien de la toile 52 en position déployée.

Comme décrit précédemment en relation avec la figure 1, les moyens d'éclairage sont composés d'un cylindre transparent permettant de diriger la lumière, et d'une LED, placée à une des extrémités du cylindre.

Selon les cas, la biellette porte les moyens d'éclairage ou est formée, en tout ou en partie, par ces derniers.

Ainsi, le cylindre transparent peut former la biellette 53, les moyens d'éclairage étant composés de la biellette 53 et d'une LED 54. La biellette 53 assure donc la même fonction que le cylindre. Dans ce mode préférentiel, la biellette 53 est formée dans un matériau transparent permettant d'atténuer, de répartir, de diffuser, de moduler et/ou de rediriger la lumière et comporte une série de stries parallèles 55, qui permettent de diriger la lumière émise par la diode électroluminescente 54.

Ainsi, lorsque la toile 52 du store est en position déployée, les biellettes 53 assurent le guidage et/ou le maintien de la toile 52 et atténuent, répartissent, diffusent, modulent et/ou redirigent la lumière des moyens d'éclairage derrière la toile du store, de sorte que la toile soit interposée entre les moyens d'éclairage et la partie de l'habitacle d'un véhicule à éclairer, créant ainsi une lumière d'ambiance à l'intérieur du véhicule (fonction éclairage d'ambiance).

Lorsque la toile 52 du store n'est pas déployée, les biellettes 53 étant dans une position sensiblement parallèle au tube enrouleur 50 du store, elles permettent de diriger la lumière des moyens d'éclairage vers le passager, par exemple à l'aide d'un miroir. Un couvercle présentant des moyens atténuant, répartissant, diffusant, modulant et/ou redirigeant la lumière peut notamment obturer la fente permettant à la toile du store de circuler (fonction liseuse).

Dans une variante particulière de ce mode de réalisation, les moyens d'éclairage sont solidarisés à au moins une biellette, la biellette étant pourvue de moyens de maintien du cylindre et de la LED. Notamment, les moyens d'éclairage peuvent être clipser aux biellettes, ou encore souder ou coller.

Lorsque les moyens d'actionnement du store comprennent plusieurs biellettes, au moins l'une d'elles comprend une LED et assure la fonction d'éclairage d'ambiance et/ou de liseuse.

Selon d'autres variantes de ce mode de réalisation, les biellettes sont remplacées par des moyens assurant la même fonction (croisillons, pistons...).

Dans les modes de réalisation décrits précédemment, le store se déploie de bas vers le haut. Il est bien entendu que dans d'autres modes de réalisation non décrits, le store peut se déployer du haut vers le bas ou horizontalement, dans le cas où le store s'étend le long du pavillon, ou encore transversalement pour les vitres de custode. On peut également prévoir un dispositif selon l'invention dans une tablette arrière du véhicule.

Bien que les modes de réalisation décrits prévoient la mise en oeuvre d'un barreau strié, d'autres types d'éclairage peuvent être prévus, sous la forme d'ampoules classiques, de tubes néon, d'ensemble de diodes lumineuses, ... et de moyens pour adapter et diriger la lumière.

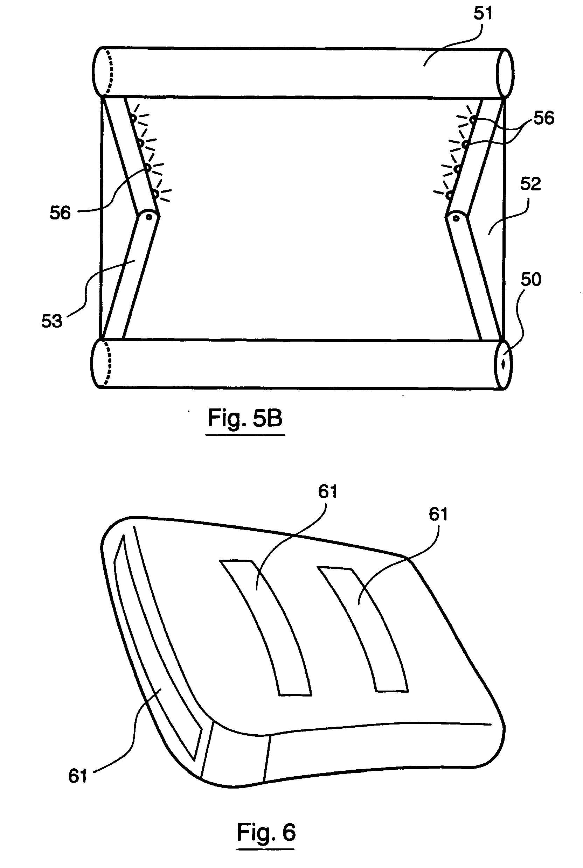

La figure 5B présente ainsi le cas de biellettes 53 équipées de diodes 56.

Avantageusement, plusieurs emplacements à l'intérieur du véhicule sont équipés, pour fournir un effet d'ambiance global.

On présente maintenant en relation avec la figure 6 un moyen de préhension de la toile du store, appelé patte de tirage. Celle-ci peut avantageusement comprendre des moyens d'éclairage, participant au résultat d'ensemble et/ou permettant de la repérer plus aisément.

Une telle patte de tirage est composée d'un matériau permettant d'atténuer, de répartir, de diffuser, de moduler et/ou de rediriger la lumière, au moins sur des zones 61 prédéfinies.

Ainsi, lors de l'activation des moyens d'éclairage d'un système d'éclairage d'ambiance selon l'invention (ou en permanence), la patte de tirage du store est rétro éclairée, ce qui permet en outre de la retrouver plus facilement dans la pénombre.

L'invention s'étend également aux systèmes de store dont l'enroulement et le déroulement sont automatisés, bien que ce mode de réalisation ne soit pas présenté en détail dans ce document. Dans ce cas, l'ouverture du couvercle peut également être motorisée.

Dans un mode de réalisation particulier de l'invention, un bouton est prévu au niveau du tableau de bord ou au niveau d'au moins une portière pour permettre l'activation de l'invention. Ce bouton peut avoir deux positions permettant soit le déroulement du store et l'activation des moyens d'éclairage (fonction éclairage d'ambiance), soit seulement l'activation des moyens d'éclairage (fonction liseuse).

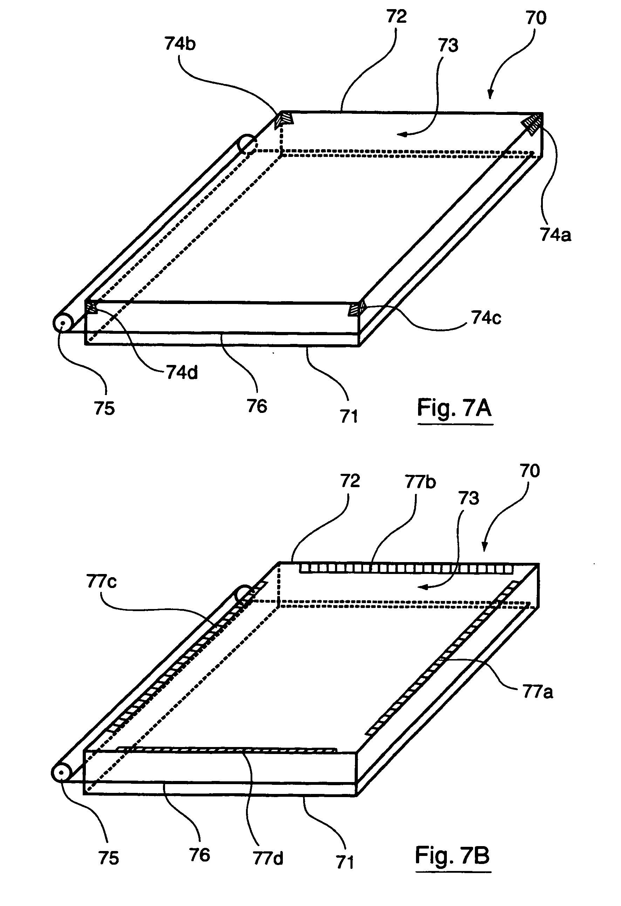

La figure 7A présente un mode de réalisation de l'invention selon lequel le système d'éclairage est monté dans le pavillon 70. Selon ce mode de réalisation, le pavillon comprend deux panneaux 71, 72 superposés et définissant un espace 73 à l'intérieur duquel est monté le système d'éclairage selon l'invention.

Les deux panneaux 71, 72 pourront en particulier être deux panneaux vitrés, le pavillon étant alors formé d'un double vitrage. Il est cependant bien sûr envisageable que seul le panneau interne 71, situé du côté de l'habitacle du véhicule, ne soit vitré.

Des moyens d'éclairage 74a, 74b, 74c, 74d, comprenant par exemple une diode et formant une source lumineuse ponctuelle, sont montés au niveau des quatre coins (ou angles) du pavillon, par exemple dans la garniture du véhicule au niveau des angles.

Le tube d'enroulement 75 du store pourra, par exemple, être monté dans la garniture du véhicule, au niveau du pavillon, de façon que la toile 76 du store se déploie dans l'espace 73 entre les deux panneaux 71, 72 du pavillon, et entre les moyens d'éclairage 74a, 74b, 74c, 74d et l'habitacle. Telle qu'illustrée par la figure 7A, la toile 76 est dans la position déployée.

Dans un autre mode de réalisation, deux stores, ou plus, peuvent être prévus, pouvant couvrir sélectivement des parties du pavillon.

Les sources lumineuses 74a, 74b, 74c, 74d pourront être plus ou moins inclinées, de façon à obtenir un éclairage sur toute la surface du pavillon 70 ou au contraire plus localisé, lorsque la toile 76 du store est déployée et s'interpose entre les sources lumineuses 74a, 74b, 74c, 74d et l'habitacle.

Lorsque la toile 76 est en position repliée, le système d'éclairage est, selon ce mode de réalisation, également exploitable, les moyens d'éclairage pouvant alors former un plafonnier ou des liseuses pour les passagers du véhicule.

Par ailleurs, lorsque les moyens d'éclairage, ou tout au moins une partie des moyens d'éclairage, sont montés dans d'autres éléments du véhicule tels que par exemple dans la garniture au niveau d'une portière ou de la vitre de custode ou encore de la vitre arrière, ils pourront également être exploitables lorsque la toile du store est en position repliée.

La figure 7B illustre un autre positionnement du système d'éclairage monté au niveau d'un pavillon, tel que décrit dans la figure 7A.

Selon cette approche, des moyens d'éclairage 77a, 77b, 77c, 77d sont montés au niveau de chacun des quatre bords du pavillon 70.Les moyens d'éclairage 77a, 77b, 77c, 77d sont par exemple formés de tubes distribuant la lumière. Comme indiqué précédemment, chacun des tubes peut comprendre un cylindre strié à une extrémité duquel est montée une diode permettant d'éclairer le tube.

Il sera bien sûr possible d'envisager la présence d'une diode à chacune des extrémités du cylindre, si une seule diode s'avère insuffisante pour éclairer le tube sur toute sa longueur.

D'autres moyens d'éclairage et d'autres répartitions de ces moyens d'éclairage pourront bien sûr être mis en oeuvre pour obtenir l'éclairage souhaité de l'habitacle, Bien sûr, l'implantation des sources lumineuses peut être différente, et notamment combiner les sources des figures 7A et 7B.

Les différents éléments (sources lumineuses, store,...) peuvent être dissimulés par de la sérigraphie, ou la garniture intérieure du véhicule.

Dans les différents modes de réalisation, la puissance, la couleur, et d'autres paramètres peuvent être réglables.

Enfin, on peut bien sûr combiner les modes de réalisation destinées aux vitres latérales et aux pavillons, et le cas échéant les étendre à d'autres parties du véhicule équipées d'un store.

## Revendications

1. Système d'éclairage d'ambiance pour véhicule automobile, comprenant au moins un store (12) présentant une toile (14) de protection contre les effets du soleil, mobile entre une position repliée et une position déployée, et des moyens d'éclairage, **caractérisé en ce que** les moyens d'éclairage sont distincts et indépendants de ladite toile (14), et que ladite toile (14) est interposée entre lesdits moyens d'éclairage et l'espace à éclairer à l'intérieur dudit véhicule lorsqu'elle est montée dans ledit véhicule et dans ladite position déployée, et est choisie de façon à atténuer, répartir, diffuser et/ou moduler la lumière produite par lesdits moyens d'éclairage.

2. Système d'éclairage d'ambiance selon la revendication 1, **caractérisé en ce que** lesdits moyens d'éclairage sont montés dans la garniture (13) dudit véhicule.

3. Système d'éclairage d'ambiance selon la revendication 2, **caractérisé en ce qu'**au moins une partie desdits moyens d'éclairage est montée dans une portière et/ou dans le pavillon et/ou au voisinage de la vitre de custode et/ou dans la tablette arrière.

4. Système d'éclairage d'ambiance selon l'une quelconque des revendications 1 à 3, **caractérisé en ce qu'**au moins une partie desdits moyens d'éclairage est solidaire dudit store (12).

5. Système d'éclairage d'ambiance selon la revendication 4, **caractérisé en ce que** lesdits moyens d'éclairage sont montés sur au moins un des éléments appartenant au groupe comprenant :
- une barre de tirage (41) ;
- des moyens d'actionnement dudit store (12) ;
- des moyens de guidage et/ou de maintien dudit store (12) ;
- une patte de tirage.

6. Système d'éclairage d'ambiance selon la revendication 5, **caractérisé en ce qu'**au moins un desdits éléments présente des moyens atténuant, répartissant, diffusant, modulant et/ou redirigeant la lumière.

7. Système d'éclairage d'ambiance selon l'une quelconque des revendications 5 à 6, **caractérisé en ce que** ledit moyen d'actionnement dudit store (12) comprend au moins une biellette (53).

8. Système d'éclairage d'ambiance selon l'une quelconque des revendications 1 à 7, **caractérisé en ce que** lesdits moyens d'éclairage comprennent un cylindre (11) transparent associé à au moins une diode électroluminescente (44) dont la lumière est dirigée vers une extrémité dudit cylindre (11).

9. Système d'éclairage d'ambiance selon la revendication 8, **caractérisé en ce que** ledit cylindre (11) présente des stries (431) dirigeant une partie de la lumière sensiblement perpendiculairement à l'axe du cylindre (11).

10. Système d'éclairage d'ambiance selon la revendication 9, **caractérisé en ce que** lesdites stries (431) présentent au moins deux longueurs distinctes.

11. Système d'éclairage d'ambiance selon l'une quelconque des revendications 1 à 10, **caractérisé en ce qu'**en position repliée, ledit store (12) vient se loger à l'intérieur de la garniture (13) intérieure du véhicule, et est dissimulé par un couvercle (15).

12. Système d'éclairage d'ambiance selon la revendication 11, **caractérisé en ce que** ledit couvercle (15) s'ouvre sous l'effet d'une pression et présente un mécanisme de ralentissement de l'ouverture.

13. Système d'éclairage d'ambiance selon l'une quelconque des revendications 11 et 12, **caractérisé en ce que** ladite ouverture dudit couvercle (15) fait remonter légèrement une barre de tirage (41).

14. Système d'éclairage d'ambiance selon l'une quelconque des revendications 11 à 13, **caractérisé en ce que** ledit couvercle (15) recouvre également lesdits moyens d'éclairage.

15. Système d'éclairage d'ambiance selon l'une quelconque des revendications 11 à 14, **caractérisé en ce que** ledit couvercle présente des moyens atténuant, répartissant, diffusant, modulant et/ou redirigeant la lumière.

16. Système d'éclairage d'ambiance selon la revendication 15, **caractérisé en ce que** ledit couvercle (15) redirige au moins une partie de la lumière vers un occupant du véhicule, pour assurer une fonction de liseuse.

17. Système d'éclairage d'ambiance selon l'une quelconque des revendications, **caractérisé en ce qu'**au moins une partie desdits moyens d'éclairage est montée dans un pavillon, au niveau d'au moins un bord et/ou au moins un angle dudit pavillon.

18. Système d'éclairage d'ambiance selon la revendication 17, **caractérisé en ce que** ledit pavillon comprend deux panneaux superposés définissant un espace entre lesdits deux panneaux, lesdits moyens d'éclairage étant situés dans ledit espace et ladite toile (14) se déployant dans ledit espace.

19. Dispositif destiné à un éclairage d'ambiance dans un véhicule automobile, comprenant des moyens d'éclairage, et au moins un store (12) présentant une toile (14) de protection contre les effets du soleil, mobile entre une position repliée et une position déployée, **caractérisé en ce que** lesdits moyens d'éclairage sont distincts et indépendants de ladite toile (14), et que ladite toile (14) est interposée entre lesdits moyens d'éclairage et l'espace à éclairer à l'intérieur dudit véhicule lorsqu'elle est dans ladite position déployée, et est choisie de façon à atténuer, répartir, diffuser et/ou moduler la lumière produite par lesdits moyens d'éclairage.

20. Véhicule automobile équipé d'un système d'éclairage d'ambiance, comportant au moins un store (12) présentant une toile (14) de protection contre les effets du soleil, mobile entre une position repliée et une position déployée, et des moyens d'éclairage, **caractérisé en ce que** les moyens d'éclairage sont distincts et indépendants de ladite toile (14), et que ladite toile (14) est interposée entre lesdits moyens d'éclairage et l'espace à éclairer à l'intérieur dudit véhicule lorsqu'elle est dans ladite position déployée, et est choisie de façon à atténuer, répartir, diffuser et/ou moduler la lumière produite par lesdits moyens d'éclairage.

21. Véhicule automobile selon la revendication 20, **caractérisé en ce que** ledit système d'éclairage d'ambiance est monté au moins sur les deux portes arrière dudit véhicule et/ou au moins sur le pavillon et/ou au moins sur la tablette arrière.

22. Store équipé d'un système d'éclairage d'ambiance, destiné à être monté dans un véhicule automobile, comportant une toile (14) de protection contre les effets du soleil, mobile entre une position repliée et une position déployée, et des moyens d'éclairage, **caractérisé en ce que** les moyens d'éclairage sont distincts et indépendants de ladite toile (14), et que ladite toile (14) est interposée entre lesdits moyens d'éclairage et l'espace à éclairer à l'intérieur dudit véhicule lorsqu'elle est dans ladite position déployée, et est choisie de façon à atténuer, répartir, diffuser et/ou moduler la lumière produite par lesdits moyens d'éclairage.

23. Store selon la revendication 22, **caractérisé en ce qu'**il comprend des moyens de préhension présentant des moyens atténuant, répartissant, diffusant, modulant et/ou redirigeant la lumière.

## Claims

1. Background lighting system for a motor vehicle, comprising at least one blind (12) with a sheet (14), for protection from the effects of the sun, which can move between a drawn-in position and a deployed position, and lighting means,
**characterised in that** the lighting means are distinct and independent from the said sheet (14),
and **in that** the said sheet (14) is placed between the said lighting means and the space to be lit inside the said vehicle when the sheet is fitted in the said vehicle and in the said deployed position, and is chosen so as to dim, distribute, diffuse and/or modulate the light produced by the said lighting means.

2. Background lighting system according to Claim 1,
**characterised in that** the said lighting means are fitted in the trim (13) of the said vehicle.

3. Background lighting system according to Claim 2,
**characterised in that** at least a part of the said lighting means is fitted in a door and/or in the roof and/or near the quarter light and/or in the rear shelf.

4. Background lighting system according to any one of Claims 1 to 3, **characterised in that** at least a part of the said lighting means is secured to the said blind (12).

5. Background lighting system according to Claim 4,
**characterised in that** the said lighting means are fitted to at least one of the elements belonging to the group comprising:
- a pull bar (41);
- means for operating the said blind (12);
- means for guiding and/or holding the said blind (12);
- a pull tab.

6. Background lighting system according to Claim 5,
**characterised in that** at least one of the said elements has means that dim, distribute, diffuse, modulate and/or redirect the light.

7. Background lighting system according to either Claim 5 or Claim 6, **characterised in that** the said means for operating the said blind (12) comprises at least one connecting rod (53).

8. Background lighting system according to any one of Claims 1 to 7, **characterised in that** the said lighting means comprise a transparent cylinder (11) associated with at least one light-emitting diode (44), the light from which is directed to one end of the said cylinder (11).

9. Background lighting system according to Claim 8,
**characterised in that** the said cylinder (11) has grooves (431) directing a part of the light substantially perpendicularly to the axis of the cylinder (11).

10. Background lighting system according to Claim 9,
**characterised in that** the said grooves (431) have at least two different lengths.

11. Background lighting system according to any one of Claims 1 to 10, **characterised in that** in the drawn-in position, the said blind (12) becomes housed within the interior trim (13) of the vehicle, and is hidden by a cover piece (15).

12. Background lighting system according to Claim 11,
**characterised in that** the said cover piece (15) opens under the effect of a pressure and has a mechanism to slow down the opening.

13. Background lighting system according to either Claim 11 or Claim 12, **characterised in that** the said opening of the said cover piece (15) causes a pull bar (41) to emerge slightly.

14. Background lighting system according to any one of Claims 11 to 13, **characterised in that** the said cover piece (15) also covers the said lighting means.

15. Background lighting system according to any one of Claims 11 to 14, **characterised in that** the said cover piece has means that dim, distribute, diffuse, modulate and/or redirect the light.

16. Background lighting system according to Claim 15,
**characterised in that** the said cover piece (15) redirects at least a part of the light to an occupant of the vehicle, in order to provide a reading-light function.

17. Background lighting system according to any one of the preceding claims, **characterised in that** at least a part of the said lighting means is fitted in a roof on at least one edge and/or at least one corner of the said roof.

18. Background lighting system according to Claim 17,
**characterised in that** the said roof comprises two superposed panels defining a space between the said two panels, the said lighting means being located in the said space and the said sheet (14) being deployed in the said space.

19. Device intended to provide background lighting in a motor vehicle, comprising lighting means, and at least one blind (12) with a sheet (14), for protection from the effects of the sun, which can move between a drawn-in position and a deployed position,
**characterised in that** the said lighting means are distinct and independent from the said sheet (14),
and **in that** the said sheet (14) is placed between the said lighting means and the space to be lit inside the said vehicle when the sheet is in the said deployed position, and is chosen so as to dim, distribute, diffuse and/or modulate the light produced by the said lighting means.

20. Motor vehicle equipped with a background lighting system, including at least one blind (12) with a sheet (14), for protection from the effects of the sun, which can move between a drawn-in position and a deployed position, and lighting means,
**characterised in that** the lighting means are distinct and independent from the said sheet (14),
and **in that** the said sheet (14) is placed between the said lighting means and the space to be lit inside the said vehicle when the sheet is in the said deployed position, and is chosen so as to dim, distribute, diffuse and/or modulate the light produced by the said lighting means.

21. Motor vehicle according to Claim 20, **characterised in that** the said background lighting system is fitted at least on the two rear doors of the said vehicle and/or at least on the roof and/or at least on the rear shelf.

22. Blind equipped with a background lighting system, intended to be fitted in a motor vehicle, including a sheet (14), for protection from the effects of the sun, which can move between a drawn-in position and a deployed position, and lighting means,
**characterised in that** the lighting means are distinct and independent from the said sheet (14),
and **in that** the said sheet (14) is placed between the said lighting means and the space to be lit inside the said vehicle when the sheet is in the said deployed position, and is chosen so as to dim, distribute, diffuse and/or modulate the light produced by the said lighting means.

23. Blind according to Claim 22, **characterised in that** it comprises gripping means having means that dim, distribute, diffuse, modulate and/or redirect the light.

## Patentansprüche

1. Umgebungsbeleuchtungssystem für Kraftfahrzeuge, das wenigstens ein Rollo (12), welches eine Plane (14) zum Schutz vor Sonneneinstrahlung aufweist, die zwischen einer eingezogenen Position und einer ausgezogenen Position beweglich ist, und Beleuchtungsmittel umfasst und das **dadurch gekennzeichnet ist, dass** die Beleuchtungsmittel getrennt und unabhängig von der Plane (14) sind und dass die Plane (14) zwischen den Beleuchtungsmitteln und dem zu beleuchtenden Raum im Inneren des Fahrzeugs angeordnet ist, wenn sie im Fahrzeug montiert und in der ausgezogenen Position ist, und so gewählt wird, dass das von den Beleuchtungsmitteln erzeugte Licht gedämpft, verteilt, gestreut und/oder angepasst wird.

2. Umgebungsbeleuchtungssystem nach Anspruch 1, **dadurch gekennzeichnet, dass** die Beleuchtungsmittel in der Verkleidung (13) des Fahrzeugs montiert sind.

3. Umgebungsbeleuchtungssystem nach Anspruch 2, **dadurch gekennzeichnet, dass** wenigstens ein Teil der Beleuchtungsmittel in einer Tür und/oder im Dach und/oder in der Nähe der Heckscheibe und/oder in der Hutablage montiert ist.

4. Umgebungsbeleuchtungssystem nach einem der Ansprüche 1 bis 3, **dadurch gekennzeichnet, dass** wenigstens ein Teil der Beleuchtungsmittel mit dem Rollo (12) verbunden ist.

5. Umgebungsbeleuchtungssystem nach Anspruch 4, **dadurch gekennzeichnet, dass** die Beleuchtungsmittel montiert sind an wenigstens einem der Elemente aus der Gruppe umfassend:
- eine Zugstange (41);
- Betätigungsmittel des Rollos (12);
- Führungs- und/oder Haltemittel des Rollos (12);
- eine Zuglasche.

6. Umgebungsbeleuchtungssystem nach Anspruch 5, **dadurch gekennzeichnet, dass** wenigstens eines der Elemente Mittel zum Dämpfen, Verteilen, Streuen, Anpassen und/oder Umlenken des Lichts aufweist.

7. Umgebungsbeleuchtungssystem nach einem der Ansprüche 5 bis 6, **dadurch gekennzeichnet, dass** das Betätigungsmittel des Rollos (12) wenigstens eine Pleuelstange (53) aufweist.

8. Umgebungsbeleuchtungssystem nach einem der Ansprüche 1 bis 7, **dadurch gekennzeichnet, dass** die Beleuchtungsmittel einen transparenten Zylinder (11) aufweisen, der mit wenigstens einer Elektrolumineszenzdiode (44) verbunden ist, deren Licht zu einem Ende des Zylinders (11) gelenkt wird.

9. Umgebungsbeleuchtungssystem nach Anspruch 8, **dadurch gekennzeichnet, dass** der Zylinder (11) Streifen (431) aufweist, die ein Teil des Lichts in etwa senkrecht zur Achse des Zylinders (11) lenken.

10. Umgebungsbeleuchtungssystem nach Anspruch 9, **dadurch gekennzeichnet, dass** die Streifen (431) wenigstens zwei unterschiedliche Längen aufweisen.

11. Umgebungsbeleuchtungssystem nach einem der Ansprüche 1 bis 10, **dadurch gekennzeichnet, dass** in eingezogener Position das Rollo (12) im Inneren der Innenverkleidung (13) des Fahrzeugs verstaut und von einer Abdeckung (15) verdeckt ist.

12. Umgebungsbeleuchtungssystem nach Anspruch 11, **dadurch gekennzeichnet, dass** die Abdeckung (15) unter Einwirkung eines Drucks öffnet und einen Mechanismus zum Verzögern des Öffnens aufweist.

13. Umgebungsbeleuchtungssystem nach einem der Ansprüche 11 und 12, **dadurch gekennzeichnet, dass** das Öffnen der Abdeckung (15) eine Zugstange (41) etwas anhebt.

14. Umgebungsbeleuchtungssystem nach einem der Ansprüche 11 bis 13, **dadurch gekennzeichnet, dass** die Abdeckung (15) ebenfalls die Beleuchtungsmittel verdeckt.

15. Umgebungsbeleuchtungssystem nach einem der Ansprüche 11 bis 14, **dadurch gekennzeichnet, dass** die Abdeckung (15) Mittel zum Dämpfen, Verteilen, Streuen, Anpassen und/oder Umlenken des Lichts aufweist.

16. Umgebungsbeleuchtungssystem nach Anspruch 15, **dadurch gekennzeichnet, dass** die Abdeckung (15) wenigstens einen Teil des Lichts zu einem Fahrzeuginsassen umlenkt, um eine Funktion als Leselampe zu erfüllen.

17. Umgebungsbeleuchtungssystem nach einem der Ansprüche, **dadurch gekennzeichnet, dass** wenigstens ein Teil der Beleuchtungsmittel in einem Dach, in Höhe wenigstens eines Randes und/oder wenigstens einer Ecke des Dachs, montiert ist.

18. Umgebungsbeleuchtungssystem nach Anspruch 17, **dadurch gekennzeichnet, dass** das Dach zwei übereinander liegende Platten aufweist, die einen Raum zwischen den beiden Platten bilden, wobei die Beleuchtungsmittel im Raum angeordnet sind und die Plane (14) im Raum ausgezogen wird.

19. Vorrichtung zur Umgebungsbeleuchtung in einem Kraftfahrzeug, die Beleuchtungsmittel und wenigstens ein Rollo (12) umfasst, das eine Plane (14) zum Schutz vor Sonneneinstrahlung aufweist, die zwischen einer eingezogenen Position und einer ausgezogenen Position beweglich ist, und das **dadurch gekennzeichnet ist, dass** die Beleuchtungsmittel getrennt und unabhängig von der Plane (14) sind und dass die Plane (14) zwischen den Beleuchtungsmitteln und dem zu beleuchtenden Raum im Inneren des Fahrzeugs angeordnet ist, wenn sie in der ausgezogenen Position ist, und so gewählt wird, dass das von den Beleuchtungsmitteln erzeugte Licht gedämpft, verteilt, gestreut und/oder angepasst wird.

20. Kraftfahrzeug, ausgestattet mit einem Umgebungsbeleuchtungssystem, das wenigstens ein Rollo (12) umfasst, das eine Plane (14) zum Schutz vor Sonneneinstrahlung aufweist, die zwischen einer eingezogenen Position und einer ausgezogenen Position beweglich ist, und Beleuchtungsmittel umfasst, und das **dadurch gekennzeichnet ist, dass** die Beleuchtungsmittel getrennt und unabhängig von der Plane (14) sind und dass die Plane (14) zwischen den Beleuchtungsmitteln und dem zu beleuchtenden Raum im Inneren des Fahrzeugs angeordnet ist, wenn sie in der ausgezogenen Position ist, und so gewählt wird, dass das von den Beleuchtungsmitteln erzeugte Licht gedämpft, verteilt, gestreut und/oder angepasst wird.

21. Kraftfahrzeug nach Anspruch 20, **dadurch gekennzeichnet, dass** das Umgebungsbeleuchtungssystem an wenigstens zwei Hintertüren des Fahrzeugs und/oder wenigstens im Dach und/oder wenigstens an der Hutablage montiert ist.

22. Rollo, ausgestattet mit einem Umgebungsbeleuchtungssystem, zur Montage in einem Kraftfahrzeug, das eine Plane (14) zum Schutz vor Sonneneinstrahlung umfasst, die zwischen einer eingezogenen Position und einer ausgezogenen Position beweglich ist, und Beleuchtungsmittel umfasst, und das **dadurch gekennzeichnet ist, dass** die Beleuchtungsmittel getrennt und unabhängig von der Plane (14) sind und dass die Plane (14) zwischen den Beleuchtungsmitteln und dem zu beleuchtenden Raum im Inneren des Fahrzeugs angeordnet ist, wenn sie in der ausgezogener Position ist, und so gewählt wird, dass das von den Beleuchtungsmitteln erzeugte Licht gedämpft, verteilt, gestreut und/oder angepasst wird.

23. Rollo nach Anspruch 22, **dadurch gekennzeichnet, dass** es Greifmittel umfasst, die Mittel zum Dämpfen, Verteilen, Streuen, Anpassen und/der Umlenken des Lichts aufweisen.
